# EUROPEAN PATENT SPECIFICATION

(11) **EP 2 821 259 B1**
(45) Date of publication and mention of the grant of the patent: **05.12.2018**
(21) Application number: 13755911.8
(22) Date of filing: 21.02.2013
(51) Int. Cl.: B60C 13/00, B60C 9/08, B60C 15/00, B60C 3/04, B60C 9/02

(54) **PNEUMATIC TIRE**
LUFTREIFEN
PNEUMATIQUE

(30) Priority: 02.03.2012 JP 2012046985
(43) Date of publication of application: 07.01.2015
(73) Proprietor: Bridgestone Corporation, Tokyo 104-8340 (JP)
(72) Inventor: KURITA, Keiichi, Kodaira-shi Tokyo 187-8531 (JP)
(74) Representative: Oxley, Robin John George
(86) International application number: PCT/JP2013/000979
(87) International publication number: WO 2013/128853

(56) References cited:
- EP-A1- 2 808 183
- JP-A- S6 456 210
- JP-A- H02 241 807
- JP-A- H06 179 307
- JP-A- H10 193 924
- JP-A- H10 193 924
- JP-A- 2010 111 370
- JP-A- 2010 132 068

## Description

### TECHNICAL FIELD

The present invention relates to a pneumatic tire of which weight has been reduced by formation of a recessed portion as a thin-wall portion of side rubber in the vicinity of a bead portion of the tire.

### BACKGROUND ART

Improving fuel consumption rates of automobiles has been targeted in recent years for achieving better environmental friendliness and economy. Under this background, reduction of rolling resistance has been pursued in tires. Specifically, there have been attempts to reduce the number of constituent members of a tire and/or weights of these members.

Reducing an amount of rubber for use in a tire is particularly effective for decreasing weight of the tire and there has been proposed, for example, to make a bead filler shorter and/or thinner. However, in a case where a bead filler has been made shorter and/or thinner to reduce an amount of rubber for use in a bead portion of a tire, rigidity of the bead portion significantly drops to make it hard to ensure good controllability and stability of the tire when it is driven.
In this connection, PTL 1 proposes to form a recessed portion by thinning an outer side surface of side rubber in the vicinity of a bead portion of a tire (bead portions need a relatively large amount of rubber), to reduce an amount of rubber for use by the volume of the recessed portion and thus reduce the whole weight of the tire accordingly.

Attention is drawn to the disclosures of JP-H10-193924, EP2808183, JP-S64-56210 and JP-2010-132068.

### CITATION LIST

### Patent Literature

PTL 1: WO2009/051260

### SUMMARY OF THE INVENTION

### Technical Problems

In the structure of PTL 1, however, controllability and stability of the tire still need to be improved because rigidity of the tire decreases in the vicinity of the recessed portion. PTL 1 in this regard employs a technique of further providing at least one layer of cord reinforcing layer on the radially outer side of the carcass, to ensure good rigidity of side portions and thus good controllability and stability of the tire. But this countermeasure has a problem that it possibly runs counter to the originally intended effect of PTL 1, of reducing the tire weight.
Accordingly, there is still room for improvement in terms of simultaneously achieving both enjoying a benefit of weight reduction of a tire by formation of a recessed portion in side rubber in the vicinity of a bead portion and maintaining highly satisfactory controllability and stability of the tire.

In view of this, an object of the present invention is to provide a pneumatic tire having satisfactorily reduced weight and simultaneously ensuring good controllability and stability.

### Solution to the Problems

The inventors of the present invention studied why deterioration of controllability and stability is caused in a pneumatic tire having a recessed portion in side rubber in the vicinity of a bead portion thereof and they revealed that the deterioration is caused because a decrease in lateral rigidity of the tire in the recessed portion thereof facilitates collapse deformation, starting from the recessed portion, of a sidewall portion when lateral force is exerted on the tire.

The inventors of the present invention then made a keen study on a countermeasure for ensuring satisfactorily good controllability and stability in a pneumatic tire having a recessed portion formed in side rubber in the vicinity of a bead portion thereof, in terms of suppressing the aforementioned collapse deformation of a sidewall portion, thereby completing the present invention.

Specifically, the present invention is according to claim 1.

### Advantageous Effect of the Invention

According to the present invention, it is possible to provide a pneumatic tire having satisfactorily reduced weight by formation of a recessed portion in side rubber in the vicinity of a bead portion thereof and capable of reliably exhibiting good controllability and stability.

### BRIEF DESCRIPTION OF THE DRAWINGS

FIG. 1 is a cross sectional view in the tire width direction of a pneumatic tire according to the present invention.
FIG. 2A is a diagram showing how air exerts force on an inner surface of the pneumatic tire of the present invention from the inner side toward the outer side in the tire width direction when the tire is inflated at predetermined internal pressure.
FIG. 2B is a diagram showing how air exerts force on an inner surface of a conventional pneumatic tire from the inner side toward the outer side in the tire width direction when the tire is inflated at predetermined internal pressure.

### DESCRIPTION OF THE EMBODIMENTS

A pneumatic tire according to the present invention will be described in detail hereinafter with reference to the drawings.

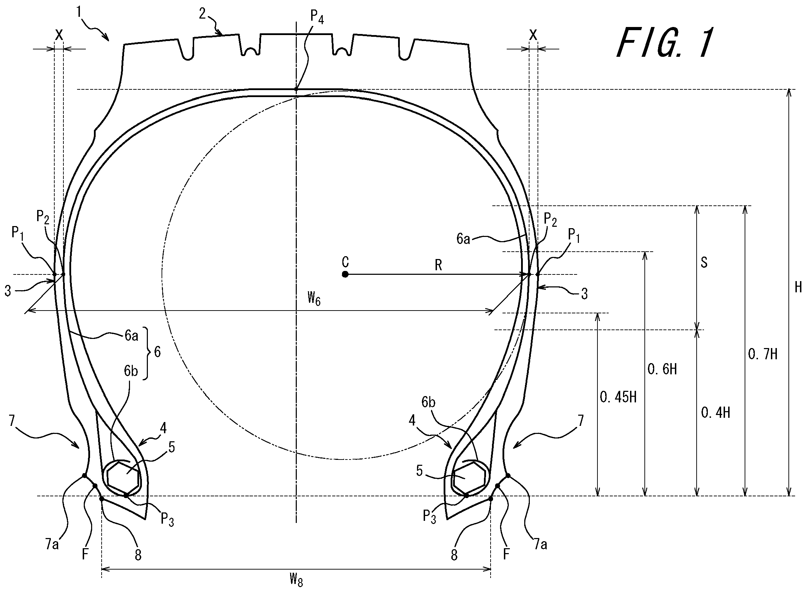

FIG. 1 is a cross sectional view in the tire width direction of a pneumatic tire 1 of the present invention (which tire will be referred to as the "tire" hereinafter) in a state where the tire has been assembled with a prescribed rim and inflated at the normal maximum internal pressure with no load exerted thereon. It should be noted, however, FIG. 1 shows some dimensions measured in a state where the tire is not assembled with a rim (which state will be referred to as "the non-rim assembled state" hereinafter), as well, for convenience of explanation.

The tire 1 has a tread portion 2, a pair of sidewall portions 3, and a pair of bead portions 4. The tire 1 further has a carcass 6 constituted of at least one ply including a ply main body 6a provided to extend in a toroidal shape across a pair of bead cores 5, 5 respectively embedded in the bead portions 4, 4 and respective wound-up portions 6b, 6b each extending from the ply main body 6a to be wound up around the corresponding bead core 5 from the inner side toward the outer side in the tire width direction.

Further, the tire 1 has a recessed portion 7 at an outer surface of each sidewall portion 3 in a region defined in the tire radial direction between a rim separating point F and the tire maximum width position P₁ of the sidewall portion 3. In the present invention, a "rim separating point F" represents a point at which an outer side surface of the tire is released from contact with a rim flange in a state where the tire 1 has been assembled with a prescribed rim and inflated at the normal maximum internal pressure prescribed for size of the tire with no load exerted thereon (which state will be referred to as "the tire-rim assembled state" hereinafter). A "prescribed rim" represents a standard rim prescribed for each tire size by an industrial standard which is valid in an area where the tire is manufactured and used. Examples of the industrial standard include: JATMA (The Japan Automobile Tyre Manufacturers Association, Inc.) YEAR BOOK in Japan; ETRTO (European Tyre and Rim Technical Organisation) STANDARD MANUAL in Europe; TRA (THE TIRE and RIM ASSOCIATION INC.) YEAR BOOK in the United States; and the like. The "tire maximum width position P₁" of the sidewall portion 3 represents the outermost end in the tire width direction of each sidewall portion 3. The recessed portion 7 is provided at an outer surface of the tire (each sidewall portion 3) in a region defined in the tire radial direction between the rim separating point F and the tire maximum width position P₁ such that the recessed portion is entirely included within the region. The recessed portion 7 is formed to be recessed on the inner side in the tire width direction by thinning a corresponding portion of the sidewall portion 3.

In the present invention, it is possible to reduce an amount of a rubber material for use by a volume of the recessed portion 7 by forming the recessed portion 7 in a side rubber region ranging from the rim separating point F to the tire maximum width position P₁, thereby successfully decreasing weight and thus rolling resistance of the tire.

The present invention essentially includes, in addition to the aforementioned structures, following structural features 1) and 2) that:
1) the maximum width in the tire width direction of the carcass is 120 % to 135 % of a distance between a pair of bead heals in a state where the tire has been assembled with a prescribed rim and inflated at the normal maximum internal pressure with no load exerted thereon, and
   the outermost end in the tire width direction of the carcass is disposed within a region defined in the tire radial direction between a position distanced from the innermost end in the tire radial direction of the carcass toward the outer side in the tire radial direction by 45 % of the carcass height and a position distanced from the innermost end in the tire radial direction of the carcass toward the outer side in the tire radial direction by 60 % of the carcass height in the tire-rim assembled state, and thickness of each sidewall portion in the region is constant and within the range of 3.0 mm to 5.0 mm; and
2) provided that a radius of curvature of the carcass at the outermost end in the tire width direction of the carcass is R and the carcass height is H in the aforementioned tire-rim assembled state, R/H ≥ 0.45.

In the present invention, "the maximum width in the tire width direction of the carcass" (W₆) represents a distance in the tire width direction between the outermost ends P₂, P₂ in the tire width direction of the ply main body 6a, as shown in FIG. 1. A "distance between bead heals" (W₈) represents a distance in the tire width direction between bead heals 8, 8 of the pair of the bead portions 4, 4 and corresponds to the width of a prescribed rim described in the aforementioned industrial standards such as JATMA. A "carcass height H" represents a distance in the tire radial direction between a line drawn to be in parallel with the tire rotation axis and pass the innermost end P₃ in the radial direction of the carcass and a line drawn to be in parallel with the tire rotation axis and pass the outermost end P₄ in the radial direction of the carcass.

FIG. 1 shows an example in which the carcass 6 is constituted of a single ply and the dimensions determined by the carcass shown in FIG. 1 are to be measured from the cross sectional cord center of the ply main body of the carcass unless otherwise specified in particular.
In this connection, in a case where the carcass 6 is constituted of a plurality of plies (not shown), the dimensions determined by the carcass are to be measured from an imaginary carcass cross sectional centerline which passes the widthwise middle between the cross sectional cord center line of the ply main body of the innermost carcass ply in the tire width direction and the cross sectional cord center line of the ply main body of the outermost carcass ply in the tire width direction.

In the example shown in FIG. 1, the maximum width in the tire width direction of the carcass W₆ is 125 % of the distance between a pair of the bead heals W₈; each outermost end P₂ in the tire width direction of the carcass is disposed at a position distanced from the innermost end P₃ in the tire radial direction of the carcass toward the outer side in the tire radial direction by 54 % of the carcass height H; and a carcass configuration including the outermost end P₂ in the tire width direction of the carcass is defined by an arc as a part of a circle formed to have the center C thereof on the tire inner side of the carcass and R/H = 0.45, provided that R represents a radius of curvature R of the circle and H represents the carcass height.

In a case where the recessed portion 7 is formed in the side rubber in a region thereof between the rim separating point F and the tire maximum width position P₁, weight of the tire can be reduced but lateral rigidity of the tire decreases to cause controllability and stability of the tire to deteriorate. Specifically, formation of the recessed portion 7 decreases rigidity in a region ranging from each bead portion 4 to the corresponding sidewall portion 3, thereby causing a tire configuration in the region to be deformed relatively easily when lateral force is exerted thereon. As a result, balance in the tire width direction of the tire is disturbed, which deteriorates controllability and stability of the tire.

In view of this, the present invention realizes in a pneumatic tire having a recessed portion in side rubber in the vicinity of a bead portion the following structural features 1) and 2) that:
1) the maximum width in the tire width direction of the carcass is 120 % to 135 % of a distance between a pair of bead heals in a state where the tire has been assembled with a prescribed rim and inflated at the normal maximum internal pressure with no load exerted thereon, and
   the outermost end in the tire width direction of the carcass is disposed within a region defined in the tire radial direction between a position distanced from the innermost end in the tire radial direction of the carcass toward the outer side in the tire radial direction by 45 % of the carcass height and a position distanced from the innermost end in the tire radial direction of the carcass toward the outer side in the tire radial direction by 60 % of the carcass height in the tire-rim assembled state, and thickness of each sidewall portion in the region is constant and within the range of 3.0 mm to 5.0 mm; and
2) provided that a radius of curvature of the carcass at the outermost end in the tire width direction of the carcass is R and the carcass height is H in the aforementioned tire-rim assembled state, R/H ≥ 0.45,
   so that lateral rigidity of the tire enhances and good controllability and stability of the tire are obtained.

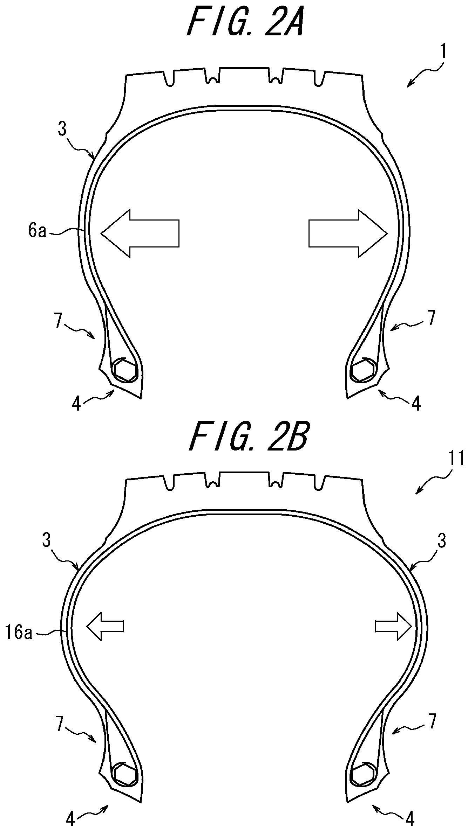

The carcass ply main body 6a extending from the respective bead portions 4 to the corresponding sidewall portions 3 shown in FIG. 2A has larger rising angles from the tire rotation axis than the carcass ply main body 16a of a conventional pneumatic tire 11 shown in FIG. 2B, thereby exhibiting larger radii of curvature in respective regions in the vicinities of the outermost ends P₂ in the tire width direction of the carcass. Accordingly, the proportion of force components exerted toward the outer side in the tire width direction at the sidewall portions by inner pressure increases, i.e. a resultant force of forces pushing the inner surface of the tire toward the outer side in the tire width direction, exerted by air, is relatively large, in the tire 1 of the present invention when the tire is inflated, as compared with the conventional pneumatic tire, whereby side rigidity of the tire 1 is successfully enhanced. As a result, it is possible to suppress collapse deformation of the sidewall portions 3 and ensure generally good controllability and stability in the tire 1 in spite of formation of the recessed portion 7 in side rubber thereof.

As described above, it is possible to enhance lateral rigidity of the tire and ensure good controllability and stability thereof by: setting the maximum width W₆ in the tire width direction of the carcass and disposing each outermost end P₂ in the tire width direction of the carcass to satisfy the requirements of the aforementioned feature 1), respectively; and adjusting a carcass configuration of a region including the outermost end position P₂ such that R/H ≥ 0.45, provided that R represents a radius of curvature of the carcass at the outermost end in the tire width direction of the carcass and H represents the carcass height in the tire-rim assembled state.

The maximum width W₆ in the tire width direction of the carcass is to be 120 % to 135 % of the distance W₈ between a pair of the bead heals because the maximum width W₆ in the tire width direction of the carcass needs to have such a dimension in order to ensure: a carcass configuration capable of supporting load exerted on the tire; and satisfactorily large lateral rigidity of the tire.

Specifically, the bead portions lie over the rim flange exceedingly and durability of the bead portions may deteriorate when W₆ exceeds 135 % of W₈. W₆ less than 120 % of W₈ may reduce an air volume of the tire and thus loading capacity of the tire, possibly causing a problem in terms of durability of the tire as a whole.
The thickness x of each sidewall portion 3 of a region S shown in FIG. 1 is essentially in the range of 3.0 mm to 5.0 mm in terms of stable reception of force exerted by internal pressure and reliable protection from externally caused damages.

Further, it is important in the present invention that the carcass 6 has the wound-up portions 6b, 6b respectively wound up around the bead cores 5, 5 from the inner side toward the outer side in the tire width direction.
Winding the carcass 6 around the bead cores 5 as described above not only allows the inner end in the tire radial direction of the recessed portion 7 to be positioned close to the rim separating point F, thereby satisfactorily reducing an amount of rubber in use, but also well prevents the carcass 6 from being pulled out of the bead portions 4.

Yet further, provided that R' represents a radius of curvature of the carcass and H represents the carcass height, R'/H ≥ 0.45 over the entirety of a region S defined in the tire radial direction between a position distanced from the innermost end P₃ in the tire radial direction of the carcass 6 toward the outer side in the tire radial direction by 40 % of the carcass height H and a position distanced from the innermost end P₃ in the tire radial direction of the carcass 6 toward the outer side in the tire radial direction by 70 % of the carcass height in the tire -rim assembled state.
In short, with regard to a radius of curvature R' of the carcass 6 in the aforementioned region S, the ratio R'/H is at least 0.45 over the entirety of the region S. In other words, the minimum value of the ratio R'/H is at least 0.45 for a radius of curvature R' of the carcass 6 over the entire region S.
Designing a carcass configuration in the aforementioned region S as the vicinities of the outermost end P₂ in the tire width direction of the carcass (the region S includes the outermost end P₂) such that the ratio R'/H is at least 0.45 over the entirety of the region S defined in the radial direction causes the rising angles of the carcass lines from the tire rotation axis to be satisfactorily large over the entire region S defined in the radial direction and thus causes a resultant force pushing the sidewall portions from the inner side toward the outer side in the tire width direction, exerted by air in the region S, to be satisfactorily large when the tire is inflated by air, thereby significantly enhancing lateral rigidity of the tire. As a result, further better controllability performance of the tire can be ensured.

Aspect ratio of the tire 1 according to the present invention is preferably in the range of 60 to 80 from the view points described above.

Further, it is important that thickness x of each sidewall portion 3 is constant and set to be within the range of 3.0 mm to 5.0 mm in a region defined in the tire radial direction between a position distanced from the innermost end P₃ in the tire radial direction of the carcass 6 toward the outer side in the tire radial direction by 45 % of the carcass height H and a position distanced from the innermost end P₃ in the tire radial direction of the carcass 6 toward the outer side in the tire radial direction by 60 % of the carcass height in the non-rim assembled state, as shown in FIG. 1.
In the present invention, "thickness x" of each sidewall portion represents the shortest distance measured from the cord center of the ply main body 6a to the outer surface of the tire in the sidewall portion 3. Referring to FIG. 1 for specific explanation, thickness x represents a distance measured from the outermost end P₂ in the tire width direction of the carcass ply main body 6a to the intersect point of a normal line with respect to the ply main body 6a, with the outer surface of the tire, i.e. a distance between the outermost end P₂ and the tire maximum width position P₁.

The proportion of force components exerted toward the outer side in the tire width direction by inner pressure is larger in the tire of the present invention than in the conventional tire, as explained by using FIG. 2A. Accordingly, it is possible for the tire to evenly receive force exerted toward the outer side in the tire width direction by internal pressure and thus realize further better controllability and stability by setting thickness of the sidewall portion in the aforementioned region to be constant. In this connection, the thickness of each sidewall portion 3 of the aforementioned region is essentially in the range of 3.0 mm to 5.0 mm in terms of achieving stable reception of force exerted by internal pressure, reliable protection from externally caused damages, and good suppression of deterioration of durability caused by heat generation. Specifically, the thickness x of each sidewall portion 3 exceeding 5.0 mm naturally fails to cause a good effect of reducing tire weight and may rather deteriorate durability because of heat generation. The thickness x of each sidewall portion 3 less than 3.0 mm makes the tire susceptible to externally caused damages, thereby facilitating occurrence of troubles, and also makes it difficult to ensure good controllability and stability of the tire.

It is preferable in the present invention that the innermost end 7a in the tire radial direction of the recessed portion 7 exists in the tire-rim assembled state in a region defined in the tire radial direction between the position in the tire radial direction of the rim separating point F and the position distanced from the rim separating point F toward the outer side in the tire radial direction by 10 mm.
Disposing the innermost end 7a in the tire radial direction of the recessed portion 7 in the aforementioned range, i.e. 0-10 mm from the rim separating point F in the outer side in the tire radial direction, satisfactorily decreases an amount of rubber to be used in the bead portions, thereby making it possible to well reduce tire weight with maintaining adequate tire rigidity.

### Examples

Next, test tires of Examples 1 and 2 and Comparative Example 7 were prepared such that these test tires each had tire size : 275/80R22.5, a recessed portion formed in each region defined from the rim separating point to the tire maximum width position as shown in FIG. 1, and respective characteristics shown in Table 1.
Further, test tires of Comparative Examples 1 to 6 and a test tire of Conventional Example, of which characteristics were changed from the test tires of Examples 1 and 2 and Comparative Example 7 as shown in Table 1, were prepared, respectively.
The test tires of Comp. Examples 1 to 3 and Conventional Example have structures similar to those of the test tires of Examples 1 and 2 and Comparative Example 7 but are different in at least one characteristic from the test tires of Examples 1 and 2 and Comparative Example 7, as shown in Table 1. In this connection, "Decrease in tire weight [kg]" in Table 1 represents a decrease in weight with respect to a tire having no recessed portion and thus is equivalent to rubber weight (kg) reduced by recessed portions.

Each of the test tires of Examples 1 and 2, Comp. Examples 1 to 7 and Conventional Example was assembled with a rim having rim size: 8.25 × 22.5 and rim width: 8.25 inches (21.0 cm), inflated at internal pressure of 900 kPa, mounted on a vehicle, and subjected to the following tests for evaluating "controllability and stability" and "durability" thereof.

### <Evaluation of controllability and stability>

Controllability and stability of each test tire was evaluated by a test driver who drove a vehicle having the test tire mounted thereon on a test course under fine-weather conditions and comprehensively evaluated braking, acceleration, straight-running and cornering performances according to how the test driver felt. The evaluation results are shown in Table 1. The evaluations in Table 1 are each expressed as an index value relative to "100" as the corresponding result of Conventional Example. The larger index value represents the better controllability and stability.

### <Evaluation of durability>

Durability of each test tire was evaluated by: charging the tire with oxygen (oxygen concentration ≥ 90%), assembling the tire with a rim having the size described above, and inflating the tire thus assembled with the rim at internal pressure of 900 kPa; leaving the tire in a constant temperature room at 60°C for 60 days in a state where the tire leaned against a wall of the room, to make the tire experience aging degradation; mounting the tire thus aging-degraded on a drum tester; imparting the tire with a slip angle such that side force exerted on the tire was 0.3G (975 kg) under the load (3575 kg) corresponding to 110% of the load prescribed by JATMA and at the test speed of 60 km/hour, and making the tire being rotated repeatedly on the drum tester (diameter: 1.7 m); measuring in the process of repeated rotation of the tire a running distance travelled by the tire prior to generation of cracks from the recessed portion and growth of the cracks thereafter; and converting the running distance thus measured to a "Durability" index (result) shown in Table 1 for durability evaluation. The evaluations in Table 1 are each expressed as an index value relative to "100" as the corresponding result of Conventional Example. The larger index value represents the better durability.

### <Evaluation of resistance to externally caused damages>

Resistance to externally caused damages of each test tire was evaluated by: charging the tire with air, assembling the tire with a rim having the size described above, and inflating the tire thus assembled with the rim at normal internal pressure; holding the tire such that the tire was inclined at 45° with respect to the horizontal plane; inserting a projection having a regular triangle-like shape (width: 50 mm, side length: 50 mm) into the tire at the tire maximum width position thereof such that the insertion direction of the projection was orthogonal to the horizontal plane (i.e. the projection was inserted into the tire in a slanted manner such that the insertion direction was inclined at 45° with respect to the tire rotation direction); and measuring force required for inserting the projection through the tire to cause air leaking. The evaluations in Table 1 are each expressed as an index value of the force thus measured, relative to "100" as the corresponding result of Conventional Example. The larger index value represents the higher resistance or better durability.

### Table 1

**Table 1**

| | Conventional Example | Example 1 | Comparative Example 1 | Comparative Example 2 | Comparative Example 3 | Comparative Example 4 | Comparative Example 5 | Comparative Example 6 | Comparative Example 7 | Example 2 |
|---|---|---|---|---|---|---|---|---|---|---|
| Maximum width in tire width direction of carcass W₆(mm) | 280 | 264 | 264 | 264 | 290 | 264 | 264 | 264 | 264 | 264 |
| Distance between bead heals Ws(mm) | 210 | 210 | 210 | 210 | 210 | 225 | 210 | 210 | 210 | 210 |
| W₆/W₈(mm) | 133% | 126% | 126% | 126% | 138% | 117% | 126% | 126% | 126% | 126% |
| Carcass height H(mm) | 195 | 195 | 195 | 195 | 195 | 195 | 195 | 195 | 195 | 195 |
| Distance (mm) in tire radial direction measured from the innermost end P₃ in tire radial direction of carcass to the outermost end P₂ in tire width direction of carcass | 0.56H | 0.56H | 0.56H | 0.56H | 0.56H | 0.56H | 0.4H | 0.65H | 0.56H | 0.56H |
| Radius of curvature R (mm) of carcass at the outermost end in tire width direction of carcass | 80 | 95 | 95 | 95 | 95 | 95 | 95 | 95 | 80 | 95 |
| R/H value | 0.41 | 0.49 | 0.49 | 0.49 | 0.49 | 0.49 | 0.49 | 0.49 | 0.41 | 0.49 |
| Minimum radius of curvature R' (mm) within the range in tire radial direction of 0.4H to 0.7H | 80 | 95 | 95 | 95 | 95 | 95 | 95 | 95 | 80 | 95 |
| Thickness x (mm) of each sidewall portion | 5 | 5 | 2 | 6 | 5 | 5 | 5 | 5 | 5 | 5 |
| Distance (mm) between the innermost end in tire radial direction of recessed portion and rim separating point | 10 | 10 | 10 | 10 | 10 | 10 | 10 | 10 | 10 | 15 |
| Controllability and stability | 100 | 105 | 97 | 105 | 95 | 95 | 92 | 96 | 100 | 105 |
| Durability | 100 | 100 | 100 | 98 | 90 | 90 | 95 | 101 | 100 | 105 |
| Resistance to externally caused damage | 100 | 105 | 85 | 110 | 100 | 90 | 100 | 98 | 100 | 100 |
| Decrease in tire weight [kg] | 0 | -3.5 | -4.0 | +1.0 | 0 | -3.5 | -3.0 | -3.0 | -3.5 | +0.5 |

It has been revealed from the results shown in Table 1 that, among the pneumatic test tires each having a recessed portion in each region from the rim separating point to the tire maximum width position to reduce weight thereof, the test tires of Examples 1 and 2 can realize better controllability and stability than the test tire of Conventional Example.
Further, it has been revealed that a too large radius of curvature in vicinities of the outermost end in the tire widthwise direction of the carcass facilitates occurrence of troubles, i.e. cracks in a bead filler. Yet further, it has been revealed that setting thickness x of each sidewall portion to be in the range of 3.0 mm to 5.0 mm ensures good resistance to externally caused damages.

### INDUSTRIAL APPLICABILITY

According to the present invention, it is possible to provide a pneumatic tire having satisfactorily reduced weight and capable of ensuring good controllability and stability.

### REFERENCE SIGNS LIST

1 Pneumatic tire
2 Tread portion
3 Sidewall portion
4 Bead portion
5 Bead core
6 Carcass
6a Ply main body
6b Wound-up portion
7 Recessed portion
7a Innermost end in tire radial direction of recessed portion
8 Bead heal
C Center
F Rim separating point
H Carcass height
P₁ Tire maximum width position
P₂ Outermost end in tire width direction of carcass (ply main body 6a)
P₃ Innermost end in tire radial direction of carcass
P₄ Outermost end in tire radial direction of carcass
R Radius of curvature
S Region defined in the tire radial direction between a position distanced from the innermost end P₃ in the tire radial direction of the carcass toward the outer side in the tire radial direction by 40 % of the carcass height H and a position distanced from the innermost end P₃ in the tire radial direction of the carcass toward the outer side in the tire radial direction by 70 % of the carcass height H
W₆ Maximum width in tire width direction of carcass 6
W₈ Distance between a pair of bead heals 8, 8
x Thickness of sidewall portion 3

## Claims

1. A pneumatic tire (1), comprising: a tread portion (2), a pair of sidewall portions (3) and a pair of bead portions (4) formed to be continuous with each other; a carcass (6) constituted of at least one ply including a ply main body (6a) provided to extend in a toroidal shape across a pair of bead cores (5) respectively embedded in the bead portions (4) and respective wound-up portions (6b) each extending from the ply main body (6a) to be wound up around the corresponding bead core (5) from the inner side toward the outer side in the tire width direction; and a recessed portion (7) formed to be recessed on the inner side in the tire width direction at an outer surface of each sidewall portion (3) in a region between a rim separating point (F) and the tire maximum width position (P₁) in the sidewall portion (3), wherein:
the maximum width in the tire width direction of the carcass (6) is 120 % to 135 % of a distance between a pair of bead heals (8) in a state where the tire (1) has been assembled with a prescribed rim and inflated at the normal maximum internal pressure with no load exerted thereon;
the outermost end (P₂) in the tire width direction of the carcass (6) is disposed within a region defined in the tire radial direction between a position distanced from the innermost end in the tire radial direction of the carcass (6) toward the outer side in the tire radial direction by 45 % of the carcass height and a position distanced from the innermost end in the tire radial direction of the carcass (6) toward the outer side in the tire radial direction by 60 % of the carcass height in the tire-rim assembled state;
thickness of each sidewall portion (3) in the region is constant and within the range of 3.0 mm to 5.0 mm;
provided that R represents a radius of curvature of the carcass (6) at the outermost end (P₂) in the tire width direction of the carcass (6) and H represents the carcass height in the tire-rim assembled state, R/H ≥ 0.45; and
provided that R' represents a radius of curvature of the carcass (6) and H represents the carcass height, R'/H ≥ 0.45 over the entirety of a region (S) defined in the tire radial direction between a position distanced from the innermost end (P₃) in the tire radial direction of the carcass (6) toward the outer side in the tire radial direction by 40 % of the carcass height H and a position distanced from the innermost end (P₃) in the tire radial direction of the carcass (6) toward the outer side in the tire radial direction by 70 % of the carcass height H in the tire-rim assembled state.

2. The pneumatic tire (1) of claim 1, wherein the innermost end (7a) in the tire radial direction of the recessed portion (7) exists in the tire-rim assembled state in a region defined in the tire radial direction between the position in the tire radial direction of the rim separating point (F) and the position distanced from the rim separating point (F) toward the outer side in the tire radial direction by 10 mm.

## Patentansprüche

1. Luftreifen (1), der Folgendes umfasst: einen Laufflächenabschnitt (2), ein Paar von Seitenwandabschnitten (3) und ein Paar von Wulstabschnitten (4), die so geformt sind, dass sie miteinander zusammenhängend sind, eine Karkasse (6), die aus wenigstens einer Lage besteht, die einen Lagenhauptkörper (6a), der so bereitgestellt wird, dass er sich in einer kreisringförmigen Gestalt über ein Paar von Wulstkernen (5) erstreckt, die jeweils in den Wulstabschnitten (4) eingebettet sind, und jeweilige aufgewickelte Abschnitte (6b), die sich jeweils vom Lagenhauptkörper (6a) aus erstrecken, um von der in der Reifenbreitenrichtung inneren Seite zur äußeren Seite um den entsprechenden Wulstkern (5) aufgewickelt zu sein, einschließt, und einen ausgesparten Abschnitt (7), der so geformt ist, dass er auf der in der Reifenbreitenrichtung inneren Seite an einer Außenfläche jedes Seitenwandabschnitts (3) in einem Bereich zwischen einem Felgentrennungspunkt (F) und der Position (P₁) maximaler Reifenbreite im Seitenwandabschnitt (3) ausgespart ist, wobei:
die maximale Breite der Karkasse (6) in der Reifenbreitenrichtung in einem Zustand, in dem der Reifen (1) mit einer vorgeschriebenen Felge zusammengebaut und mit dem normalen maximalen Innendruck aufgeblasen worden ist, ohne dass eine Last auf denselben ausgeübt wird, 120 % bis 135 % einer Strecke zwischen einem Paar von Wulstfersen (8) beträgt,
das äußerste Ende (P₂) der Karkasse (6) in der Reifenbreitenrichtung innerhalb eines Bereichs angeordnet ist, der in der Reifenradialrichtung definiert ist zwischen einer Position, die vom innersten Ende der Karkasse (6) in der Reifenradialrichtung zu der in der Reifenradialrichtung äußeren Seite hin um 45 % der Karkassenhöhe beabstandet ist, und einer Position, die vom innersten Ende der Karkasse (6) in der Reifenradialrichtung zu der in der Reifenradialrichtung äußeren Seite hin um 60 % der Karkassenhöhe im montierten Zustand von Reifen und Felge beabstandet ist,
eine Dicke jedes Seitenwandabschnitts (3) in dem Bereich konstant ist und innerhalb der Spanne von 3,0 mm bis 5,0 mm liegt,
vorausgesetzt, dass R einen Krümmungsradius der Karkasse (6) am äußersten Ende (P₂) der Karkasse (6) in der Reifenbreitenrichtung darstellt und H die Karkassenhöhe im montierten Zustand von Reifen und Felge darstellt, R/H ≥ 0,45 und
vorausgesetzt, dass R' einen Krümmungsradius der Karkasse (6) darstellt und H die Karkassenhöhe darstellt, R'/H ≥ 0,45 über die Gesamtheit des Bereichs, der in der Reifenradialrichtung definiert ist zwischen einer Position, die vom innersten Ende (P₃) der Karkasse (6) in der Reifenradialrichtung zu der in der Reifenradialrichtung äußeren Seite hin um 40 % der Karkassenhöhe H beabstandet ist, und einer Position, die vom innersten Ende (P₃) der Karkasse (6) in der Reifenradialrichtung zu der in der Reifenradialrichtung äußeren Seite hin um 70 % der Karkassenhöhe H im montierten Zustand von Reifen und Felge beabstandet ist.

2. Luftreifen (1) nach Anspruch 1, wobei das in der Reifenradialrichtung innerste Ende (7a) des ausgesparten Abschnitts (7) im montierten Zustand von Reifen und Felge in einem Bereich vorhanden ist, der in der Reifenradialrichtung definiert ist zwischen der Position des Felgentrennungspunkts (F) in der Reifenradialrichtung und der Position, die vom Felgentrennungspunkt (F) zu der in der Reifenradialrichtung äußeren Seite hin um 10 mm beabstandet ist.

## Revendications

1. Bandage pneumatique (1), comprenant une partie de bande de roulement (2), une paire de parties de flanc (3) et une paire de parties de talon (4) formées de sorte à être continues les unes par rapport aux autres ; une carcasse (6) comprenant au moins une nappe incluant un corps principal de nappe (6a) agencée de sorte à s'étendre dans une forme toroïdale à travers une paire de tringles (5) noyées respectivement dans les parties de talon (4), et des parties enroulées respectives (6b) s'étendant chacune à partir du corps principal de la nappe (6a) pour être enroulées autour de la tringle correspondante (5), du côté interne vers le côté externe dans la direction de la largeur du bandage pneumatique ; et une partie évidée (7) formée de sorte à être évidée sur le côté interne, dans la direction de la largeur du bandage pneumatique, au niveau d'une surface externe de chaque partie de flanc (3) dans une région située entre un point de séparation de la jante (F) et la position à largeur maximale du bandage pneumatique (P₁) dans la partie de flanc (3) ; dans lequel :
la largeur maximale, dans la direction de la largeur du bandage pneumatique, de la carcasse (6) représente 120% à 135% d'une distance entre une paire de bouts de talon (8), dans un état dans lequel le bandage pneumatique (1) a été assemblé sur une jante prescrite et gonflé à la pression interne maximale normale, sans application de charge ;
l'extrémité externe extrême (P₂), dans la direction de la largeur du bandage pneumatique, de la carcasse (6) est disposée dans une région définie, dans la direction radiale du bandage pneumatique, entre une position espacée de l'extrémité interne extrême, dans la direction radiale du bandage pneumatique, de la carcasse (6) vers le côté externe, dans la direction radiale du bandage pneumatique, correspondant à 45% de la hauteur de la carcasse, et une position espacée de l'extrémité interne extrême, dans la direction radiale du bandage pneumatique, de la carcasse (6) vers le côté externe, dans la direction radiale du bandage pneumatique, correspondant à 60% de la hauteur de la carcasse, dans l'état d'assemblage du bandage pneumatique sur la jante ;
l'épaisseur de chaque partie de flanc (3) dans la région est constante et comprise dans l'intervalle allant de 0,3 m à 5,0 mm ;
lorsque R représente un rayon de courbure de la carcasse (6) au niveau de l'extrémité externe extrême (P₂), dans la direction de la largeur du bandage pneumatique, de la carcasse (6), H représentant la hauteur de la carcasse dans l'état d'assemblage du bandage pneumatique sur la jante, R/H ≥ 0,46 ; et
lorsque R' représente un rayon de courbure de la carcasse (6), H représentant la hauteur de la carcasse, R'/H ≥ 0,45 sur l'ensemble d'une région (S) définie dans la direction radiale du bandage pneumatique entre une position espacée de l'extrémité interne extrême (P₃), dans la direction radiale du bandage pneumatique, de la carcasse (6), vers le côté externe, dans la direction radiale du bandage pneumatique, représentant 40% de la hauteur de la carcasse H, et une position espacée de l'extrémité interne extrême (P₃), dans la direction radiale du bandage pneumatique, de la carcasse (6), vers le côté externe, dans la direction radiale du bandage pneumatique, correspondant à 70% de la hauteur de la carcasse H dans l'état d'assemblage du bandage pneumatique sur la jante.

2. Bandage pneumatique (1) selon la revendication 1, dans lequel l'extrémité interne extrême (7a), dans la direction radiale du bandage pneumatique, de la partie évidée (7) se situe, dans l'état d'assemblage du bandage pneumatique sur la jante, dans une région définie, dans la direction radiale du bandage pneumatique, entre la position, dans la direction radiale du bandage pneumatique, du point de séparation de la jante (F) et la position espacée du point de séparation de la jante (F), vers le côté externe dans la direction radiale du bandage pneumatique, de 10 mm.
